# EUROPEAN PATENT APPLICATION

(11) **EP 3 842 845 A1**
(43) Date of publication of application: **30.06.2021**
(21) Application number: 19219416.5
(22) Date of filing: 23.12.2019
(51) Int. Cl.: G02B 6/125, G02B 6/42, G02B 6/43, G02B 6/136, G02B 6/12

(54) **SEMICONDUCTOR DEVICE AND METHOD FOR MANUFACTURING A SEMICONDUCTOR DEVICE**

(71) Applicant: AMS AG, 8141 Premstätten (AT)
(72) Inventor: Kraft, Jochen, 8141 Premstätten (AT); Eilmsteiner, Gerhard, 8141 Premstätten (AT); Kusar, Primoz, 8141 Premstätten (AT); Jessenig, Stefan, 8141 Premstätten (AT)
(74) Representative: Epping - Hermann - Fischer

(57) **Abstract**

A semiconductor optical waveguide device (1) comprises a cladding layer (2) of an oxide material, the cladding layer (2) having an upper surface (2a) and a lower surface (2b), and a waveguide structure (3) disposed within the cladding layer (2), the waveguide structure (3) having an end facet (4) and an extension direction of the waveguide structure (3) being oriented along an optical axis (OA). The semiconductor optical waveguide device (1) further comprises a channel (5) extending into the cladding layer (2) from the upper surface (2a) at least to the optical axis (OA), the channel (5) having an angled sidewall surface (6), and a dielectric mirror (7) disposed in the channel (5) on the angled sidewall surface (6) for deflecting optical signals onto and/or out of the optical axis (OA).

## Description

The disclosure relates to a semiconductor optical waveguide device and to a method for manufacturing said semiconductor optical waveguide device.

Combining optics with integrated circuit CMOS devices paves the way for photonic integrated circuits, PIC, and thus enables high frequency and high density information systems, such as high sensitivity sensor devices. Commonly, such photonic devices feature waveguide structures that extend parallel to top and bottom surfaces of the respective chips and are often buried underneath the surface by other layers such as protective or functional layers. Important functionalities of these photonic devices are input and output of light into the photonic circuit. Such an optical coupling can either take place in a hybrid device, e.g. from or to a device that is directly bonded to the chip comprising the photonic circuit, or within the same chip from the photonic layer to a photodiode of a CMOS circuit, for instance. In either case, the light has to be redirected from a horizontal direction defined by the photonic circuit to a vertical direction with respect to top and bottom surfaces of the photonic device.

Conventional approaches either employ grating couplers that introduce undesired significant optical losses or 45° mirrors that are typically installed manually and possess substantial alignment requirements. This prevents available technologies from being suitable for mass production and from being manufactured in a cost-effective manner.

An object to be solved is to provide an improved concept for redirecting light in a semiconductor optical waveguide device and for manufacturing such a semiconductor optical waveguide device.

This object is achieved with the subject-matter of the independent claims. Embodiments and developments of the improved concept are subject-matter of the dependent claims.

The improved concept is based on the idea of arranging an angled dielectric mirror in a plane of the semiconductor device that comprises an optical waveguide structure. The dielectric mirror is realized as part of the manufacturing process by means of depositing a plurality of dielectric layers on an angled surface. In this way, an efficient method is provided for redirecting light from the waveguide plane towards a top or bottom surface of the semiconductor optical waveguide device. This enables efficient coupling of light into or out of said waveguide structure of a photonic circuit.

A semiconductor optical waveguide device according to the improved concept e.g. comprises a cladding layer of an oxide material having an upper surface and a lower surface, and a waveguide structure that is disposed within the cladding layer. The waveguide structure has an end facet and an extension direction of the waveguide structure is oriented along an optical axis. The semiconductor optical waveguide device further comprises a channel that extends into the cladding layer from the upper surface at least to the optical axis, wherein the channel has an angled sidewall surface. The semiconductor optical waveguide device further comprises a dielectric mirror that is disposed in the channel on the angled sidewall surface for deflecting optical signals onto and/or out of the optical axis.

The semiconductor optical waveguide device for example comprises a waveguide structure, such as a silicon nitride optical waveguide, that is part of a photonic integrated circuit. The waveguide structure is arranged within a cladding layer that comprises silicon dioxide as the oxide material, for instance. The waveguide structure has an end facet configured as an input and/or output facet of the waveguide and can be arranged such that its extension direction defining an optical axis is parallel or basically parallel to the upper and/or lower surface of the cladding layer. For example, the upper and lower surfaces are parallel to a main extension plane of a substrate body of the semiconductor optical waveguide device.

The channel extending into the cladding layer is characterized by an angled sidewall surface. In other words, the channel has a sidewall surface that is tilted with respect to the optical axis at an angle between 10° and 80°, in particular between 30° and 60°. For example, the angled sidewall and the optical axis enclose an angle of 45°. A further sidewall surface of the channel can be perpendicular or basically perpendicular to the optical axis, for instance. For example, the channel has a triangular-shaped cross-section.

The channel extends from the upper surface into the cladding layer such that at least a part of the angled sidewall surface is situated at a level of the optical axis of the waveguide structure. This means that light that is emitted from the end facet of the waveguide structure impinges on the dielectric mirror that is arranged on the angled sidewall surface.

The dielectric mirror comprises a plurality of dielectric layers. For instance, the plurality of dielectric layers comprises alternating layers of optical coatings with different refractive indices. Depending on thicknesses and/or refractive indices of said dielectric layers, the dielectric mirror has a specific wavelength band that is reflected. For example, said wavelength band comprises an optical wavelength that is guided by the waveguide structure. The term "optical" in this context may also comprise wavelengths in the infrared and/or ultraviolet regime, depending on the application of the photonic integrated circuit. In particular, the wavelength band may comprise optical wavelengths of 1.5 µm, a typical wavelength used in telecommunication applications.

Due to its aforementioned limited wavelength range for reflection the dielectric mirror, compared to conventional metallic mirrors, for example, has the advantage that light outside its reflection band, such as stray and/or background light at wavelengths other than wanted wavelengths used in the PIC, are not reflected and therefore not deflected onto the optical axis. Moreover, for light within the reflection band, dielectric mirrors are characterized by high efficiency and low optical losses due to absorption and transmission. Further advantages are the possibility to realize a polarization filter and/or a wavelength selective filter using a dielectric mirror and that the deposition of dielectric mirrors can be integrated into a CMOS-compatible manufacturing process, hence enabling cost-efficient mass fabrication without the need for manual alignment of metallic mirrors.

In some embodiments, the semiconductor optical waveguide device further comprises a focusing element for focusing and/or collimating of light that is deflected by the dielectric mirror.

Light emitted from an end facet of a waveguide structure typically has a significant divergence. In order to compensate for this divergence of the light that is deflected out of the optical axis by means of the dielectric mirror, a focusing element can be employed for focusing and/or collimation such that no light is lost when deflecting out of the optical axis towards a photodetector with a limited light-sensitive area, for instance. Analogously, in the opposite direction the focusing element can be equally configured to focus light, e.g. collimated light from a light source, that is deflected onto the optical axis by means of the dielectric mirror for efficient coupling into the waveguide structure.

To this end, the focusing element can be arranged between the dielectric mirror and the end facet of the optical axis. For example, the focusing element is arranged on a vertical sidewall surface of the channel. Alternatively, the focusing element can be arranged on the deflection axis. For example, the focusing element is arranged on the upper and/or the lower surface of the cladding layer.

In some embodiments, the focusing element is realized by an arched, in particular by a concave, shape of the dielectric mirror.

A curved mirror with an arched reflection surface can be conveniently employed for achieving the above-mentioned focusing and/or collimation. In these embodiments, the angled sidewall surface can be characterized by a corresponding arched, in particular concave, shape. For example, the curved angled sidewall surface is realized by an inclined lithography process, for instance. In this way, depositing the dichroic layers of the dielectric mirror on the angled sidewall surface results in the desired curved shape of the dielectric mirror. Hence, a smaller photo-sensitive device can be employed leading to a reduced footprint of the optical device.

In some embodiments, the focusing element is a lens element arranged on one of: the optical axis, the dielectric mirror, the upper surface and the lower surface.

Alternatively or in addition, the focusing element can be a lens element that is arranged on the optical path, i.e. either on the optical axis between the end facet and the dielectric mirror, or on the deflection axis between the dielectric mirror and a light source or photodetector, for instance. For example, the lens element is deposited on the upper or lower surface of the cladding layer or on a surface of the semiconductor optical waveguide device that is parallel to at least one of the upper and lower surfaces.

In some embodiments of the semiconductor optical waveguide device, a shielding layer is arranged on a surface of the dielectric mirror facing away from the end facet.

A shielding layer can act as protective layer for the otherwise exposed back side of the dielectric layer and/or improve the efficiency due to a decrease of optical losses through the dielectric mirror.

In some embodiments, the dielectric mirror is configured to deflect optical signals onto and/or out of the optical axis out of and/or onto a deflection axis that is basically perpendicular to a major substrate surface.

In many optical applications, perpendicular deflections are preferred as optical elements typically show best efficiencies at angles close to 45°. The major substrate surface for example is parallel to the upper and/or lower surface of the cladding layer and can be a surface of a substrate body that the cladding layer is arranged on.

In some embodiments, the deflection axis extends from the dielectric mirror towards the upper surface or towards the lower surface.

Depending on the application, light is either directed from the waveguide structure towards the lower surface or towards the upper surface of the cladding layer. In alternative applications, light is directed from the lower surface or from the upper surface towards the waveguide structure. For example, a light source or a photodetector is arranged on the lower or upper surface.

In some embodiments, the semiconductor optical waveguide device further comprises an anti-reflective coating that is disposed on the upper surface or on the lower surface.

An anti-reflective coating can further enhance optical performances of the device by preventing optical losses caused by back reflections when optical signals impinge on the upper or lower surfaces.

In some embodiments, the channel further comprises a vertical sidewall surface that is basically perpendicular to a major substrate surface.

Generally maintaining surfaces horizontal and vertical with respect to main extension planes of the substrate body, or to the upper and lower surfaces of the cladding layer, ensures that the manufacturing process is kept as simple as possible leading to an increased yield and less weak points.

In some embodiments, the end facet is basically parallel to the vertical sidewall surface.

In some embodiments, the dielectric mirror comprises a plurality of dielectric layers.

In some embodiments, the channel is filled with an oxide material, in particular the oxide material of the cladding layer.

In these embodiments, a filled channel can enhance optical efficiency of the semiconductor optical waveguide device as an oxide to gas interface inducing back reflections is avoided. Furthermore, the otherwise exposed dielectric mirror is protected as it is completely buried in oxide this way.

In some embodiments, the optical axis is basically parallel to a major substrate surface of the semiconductor device.

Photonic integrated circuits are typically manufactured following standard manufacturing processes. This typically leads to the fact that structures are generally parallel to a main extension plane of the substrate body and therefore also parallel to the upper and lower surfaces of the cladding layer.

In some embodiments, the end facet is arranged flush with the vertical sidewall surface.

In some cases, the oxide material of the cladding layer can induce optical losses if the end facet is buried in said oxide and emits optical signals into the cladding layer before impinging onto the dielectric mirror. To avoid these losses, the end facet of the waveguide structure can be arranged to flush with the channel, i.e. with the angled or a vertical sidewall surface of the channel.

The object is further solved by an integrated optical device that comprises a semiconductor optical waveguide device according to one of the embodiments described above.

The semiconductor optical waveguide device can be conveniently employed in sensor devices, in which waveguides of a photonic integrated circuit are employed. Such sensors include sensors for gas and biosensing, for example. Furthermore, optical microphones or tunable laser devices are possible applications. In all these applications, light input and output is required with high precision. As light sources and light-sensitive devices are attached to layers above or below a PIC in a most straight-forward manner, deflecting optical signals into or out of the PIC layer becomes necessary. The semiconductor optical waveguide device therefore provides a convenient way for achieving said deflection and hence paves the way for high-sensitivity low-loss optical sensor devices.

The object is further solved by a method for manufacturing a semiconductor optical waveguide device. The method comprises providing a cladding layer of an oxide material wherein the cladding layer comprises an upper surface and a lower surface, and a waveguide structure that is disposed within the cladding layer. The waveguide structure has an end facet and an extension direction of the waveguide structure is oriented along an optical axis. The method further comprises forming a channel in the cladding layer extending from the upper surface to at least the optical axis, wherein forming the channel comprises forming an angled sidewall surface of the channel. The method further comprises depositing a dielectric mirror onto the angled sidewall surface for deflecting optical signals onto and/or out of the optical axis.

In some embodiments of the method, forming the angled sidewall surface comprises forming an arched, in particular a concave, angled sidewall surface.

Further embodiments of the method for manufacturing a semiconductor optical waveguide device become apparent to a person skilled in the art from the embodiments of the semiconductor optical waveguide device described above.

The improved concept will be described in more detail in the following with the aid of drawings. Elements having the same or similar function bear the same reference symbols throughout the drawings. Hence their description is not necessarily repeated in the description of the following drawings.

In the drawings:
- Figures 1 to 4: show cross-sectional views of intermediate products of an exemplary embodiment of a semiconductor optical waveguide device according to the improved concept;
- Figures 5 and 6: show exemplary embodiments of a semiconductor optical waveguide device;
- Figures 7 and 8: show intermediate products of a further exemplary embodiment of a semiconductor optical waveguide device;
- Figures 9 to 15: show further exemplary embodiments of a semiconductor optical waveguide device; and
- Figure 16: shows a close up of an exemplary embodiment of a semiconductor optical waveguide device.

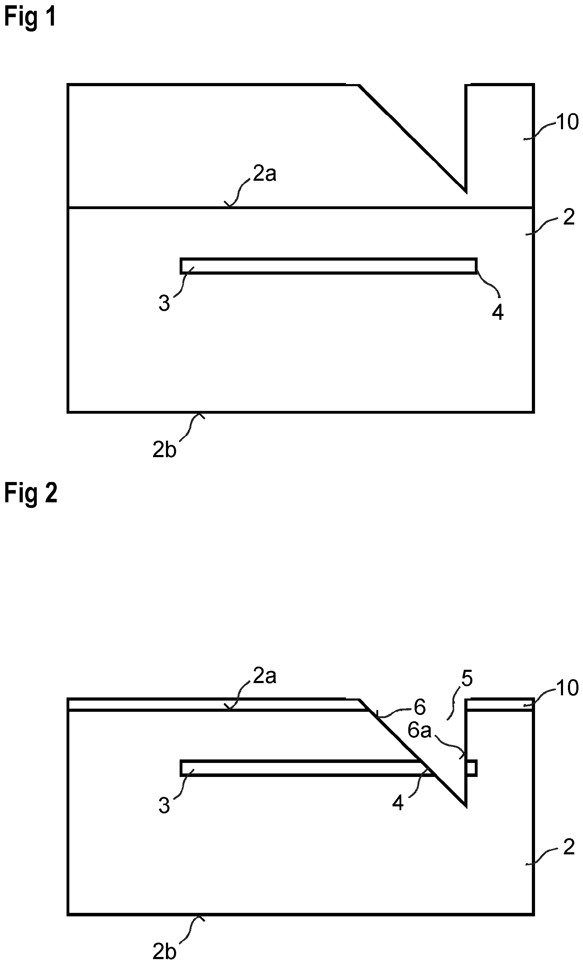

Figure 1 shows a cross-sectional view of an intermediate product of a semiconductor optical waveguide device 1 according to the improved concept. The basis for such a device is formed by a cladding layer 2 that has an upper surface 2a and a lower surface 2b and comprises a waveguide structure 3. The terms of the upper and lower surfaces merely serve illustration purposes and are interchangeable without loss of generality.

For example, the cladding layer 2 is arranged on a substrate body that is adjacent to the lower surface 2b. The cladding layer 2 is of an oxide material such as silicon dioxide, for instance. The waveguide structure 3 is disposed within the cladding layer and comprises an optical waveguide of silicon nitride or an alternative optical waveguide material with an end facet 4 wherein the waveguide extends parallel or basically parallel to the lower and/or upper surfaces 2a, 2b, for instance. The optical waveguide structure 3 can be part of an optical circuit such as a photonic integrated circuit. The end facet 4 forms an interface for coupling optical signals into or out of the waveguide structure 3.

In a first step, a patterned coating 10, for example a photoresist layer that is patterned using a greyscale lithography process, is applied on the upper surface 2a. The patterned structure in this embodiment has a triangular cross-section. However, also different geometries are possible that are characterized by at least one angled surface as illustrated. Angled in this context means that said surface is neither parallel nor perpendicular to the upper and/or lower surface 2a, 2b. The angled surface can be flat as illustrated or curved.

Figure 2 shows a cross-sectional view of an intermediate product based on that shown in Figure 1 after an etching step. Using an etchant, the pattern of the coating 10 of Figure 1 is transferred to the cladding layer 2 such that a channel 5 is formed. The channel 5 extends into the cladding layer 2 from the upper surface 2a at least to the optical axis OA that is defined by the extension direction of the waveguide structure 3. In other words, the optical axis corresponds to a propagation path of optical signals within the waveguide structure 3.

The channel 5 is characterized by an angled sidewall surface 6 and a vertical sidewall surface 6a that is perpendicular or basically perpendicular to the upper surface 2a. For example, the angled sidewall surface 6 forms an angle between 30° and 60° with respect to the optical axis OA. In this embodiment, the angled sidewall surface 6 forms an angle of about 45° with both the optical axis OA and the upper surface 2a. In this embodiment, the channel 5 is formed by also etching through the waveguide structure 3, hence a new end facet 4 is formed that is arranged flush with the angled sidewall surface 6.

The coating 10 is removed or at least reduced in terms of its thickness during the etching. The latter means that a thin layer of the coating 10 remains on the upper surface 2a, as shown in this embodiment.

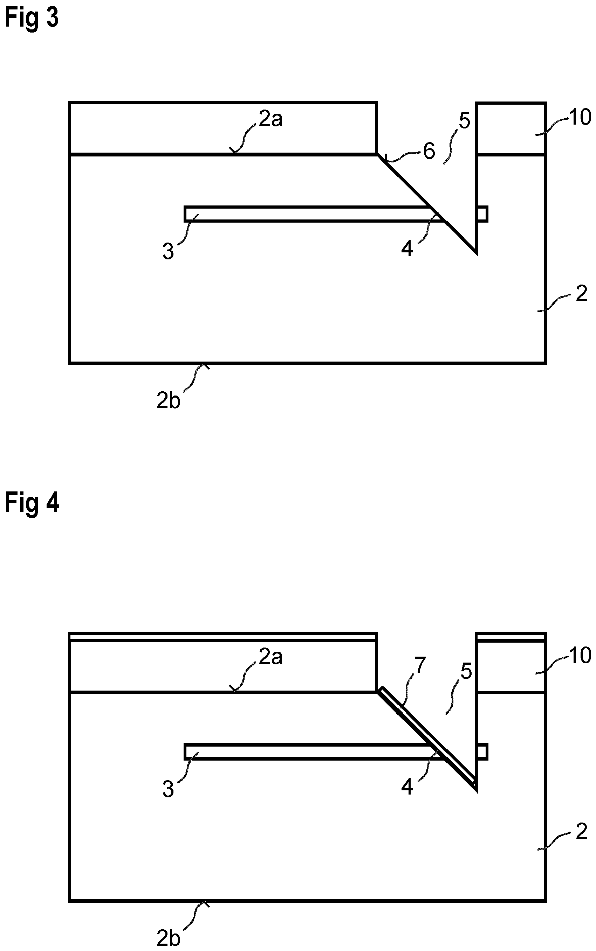

In Figure 3, a thickness of the coating 10 on the upper surface 2a is increased by application of additional coating material. Via a lithography step, for example, it is ensured that the channel 5 is free of any coating 10.

Figure 4 shows a cross-sectional view of an intermediate product based on that shown in Figure 3 after deposition of dielectric material for forming a dielectric mirror 7 on the angled sidewall surface 6 of the channel 5. Deposition of the dielectric material comprises depositing dielectric layers with alternating refractive index regarding a wavelength of interest. The previously applied coating 10 ensures that the upper surface 2a is free from any dielectric material. Optionally, also the other sidewalls of the channel 5 can be coated with dielectric material.

Using this succession of dielectric layers with different refractive indexes does not only improve the reflectivity compared to conventional metal layers employed as angled reflectors, it also enables additional features like a polarization filter and/or wavelength selective filters.

As subsequent step, the coating 10 which can be understood as a lift off mask is removed for exposing the upper surface 2a. For finalizing the semiconductor optical waveguide device, further steps such as cleaning steps can be performed. Furthermore, additional layers, such as functional layers of a CMOS integrated circuit, can be applied on the upper surface 2a and/or the lower surface 2b.

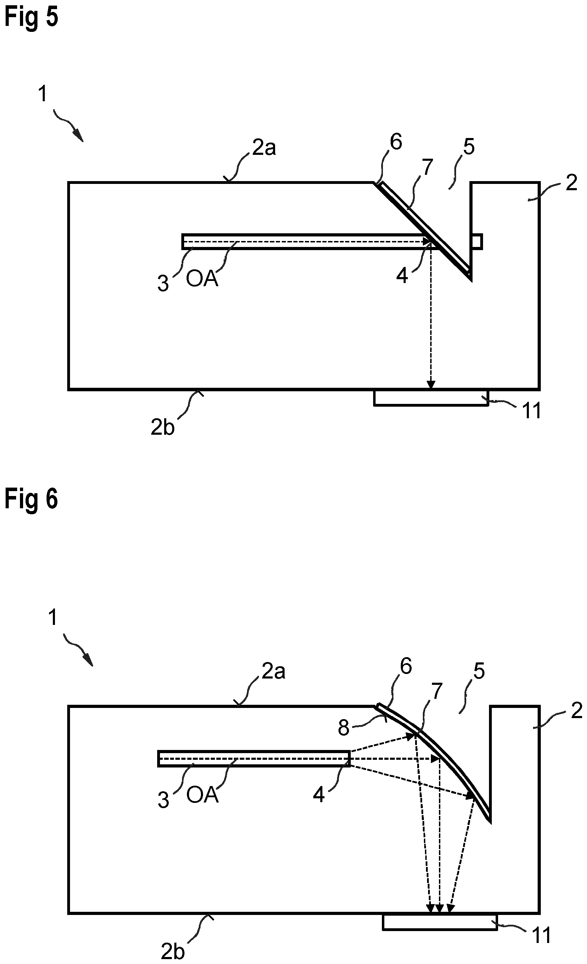

Figure 5 shows an exemplary embodiment of a semiconductor optical waveguide device 1 according to the improved concept. In this embodiment, a light-sensitive device 11 such as a photodetector is arranged on the lower surface 2b. As illustrated, the dielectric mirror 7 acts as a deflector for deflecting optical signals from the optical axis OA inside the waveguide structure 3 onto a deflection path towards the light-sensitive device 11. The improved concept is analogously applicable if the light-sensitive device 11 is arranged at a distance from the lower surface 2b, for example as part of a separate semiconductor device that is directly bonded to the semiconductor optical waveguide device.

In the embodiment shown in Figure 5, the deflection path is perpendicular or basically perpendicular to the upper and lower surfaces 2a, 2b. However, the improved concept is easily applicable to other arrangements by choosing an appropriate angle of the angled sidewall surface 6.

Figure 6 shows a further exemplary embodiment of a semiconductor optical waveguide device 1 according to the improved concept that is based on that shown in Figure 5. In this embodiment, the angled sidewall surface is realized as a curved surface as discussed above. This leads to the dielectric mirror 7 having a curved structure that corresponds to the curvature of the angled sidewall surface 6. The curved surface and interfaces of the dielectric layers of the dielectric mirror 7 result in the dielectric mirror 7 also acting as focusing element 8.

The focusing character of the dielectric mirror 7 can be conveniently employed for compensating for a divergence of optical signals emitted from the end facet 4 of the waveguide structure 3. Compensating in this context means for example a focusing or collimation of the optical signals being deflected by the dielectric mirror 7 onto the deflection path.

In this embodiment in contrast to the previous embodiment, transferring the channel 5 to the cladding layer 2 does not comprise etching the waveguide structure 3 as its end facet 4 does not extend to or into the channel 5. For example, the waveguide structure 3 is etched in advance of the transfer etch. Therefore, the waveguide structure 3 is emitting optical signals into the cladding layer 2 before impinging on the dielectric mirror 7.

This can have the effect that the channel 5, in particular the angled sidewall surface 6, is precisely transferred during the transfer etch due to the fact that only the oxide material of the cladding layer 2 is involved in the etch as the only material. This prevents non-uniform etching due to the silicon nitride material of the waveguide structure 3, for instance, having a different etch rate then the oxide material of the cladding layer 2. Furthermore, the wave guide structure 3 remains protected as it is buried in the oxide material during the transfer etch.

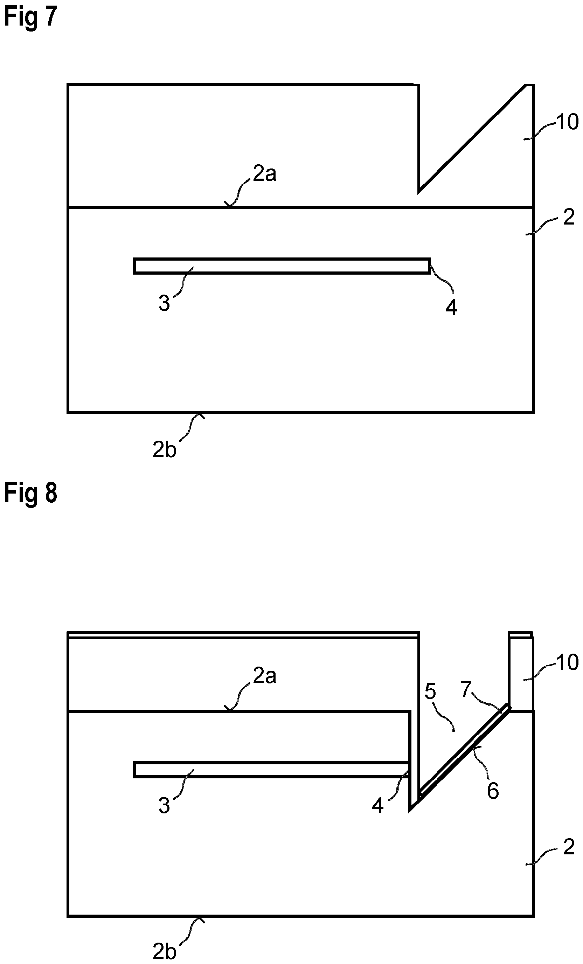

Figure 7 shows a cross-sectional view of an intermediate product of a further exemplary embodiment of the semiconductor optical waveguide device 1 according to the improved concept. In this embodiment in contrast to that shown in Figure 1, the angled surface in the patterned coating 10 is oriented on the side of the patterned structure facing away from the waveguide structure 3.

With the remaining manufacturing steps being analogous to those illustrated in Figures 1 to 5, this results in the dielectric mirror 7 being arranged on the angled sidewall surface 6 facing away from the waveguide structure 3 while the end facet 4 of the waveguide structure is arranged flush with the vertical sidewall surface 6a, as illustrated in Figure 8.

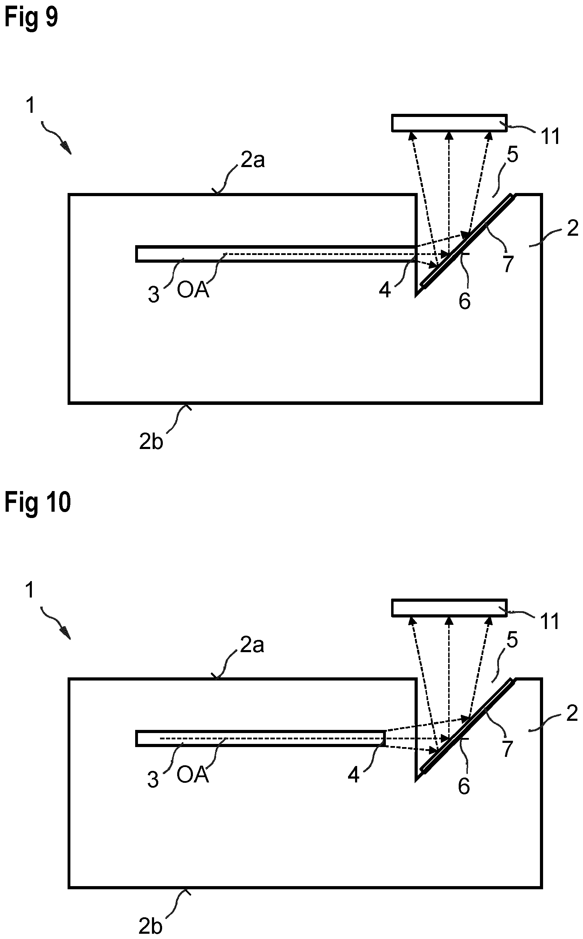

Therefore, this geometry serves the purpose of deflecting optical signals from the optical axis OA towards the upper surface 2a instead of towards the lower surface 2b. This is illustrated in Figure 9 showing a further exemplary embodiment of a semiconductor optical waveguide device 1. Depending on the application, i.e. the location at which the light-sensitive element 11 is arranged, either configuration of the angled sidewall surface 6 and the dielectric mirror 7 can be chosen.

In the embodiment of Figure 9, the light-sensitive element 11 is arranged distant from the upper surface 2a, for example as a photodetector comprised by a further semiconductor device that is bonded to a surface of the semiconductor optical waveguide device 1.

Figure 10 shows an alternative exemplary embodiment based on that of Figure 9. Similar to Figure 6, the end facet 4 of the waveguide structure 3 is arranged at a distance from the channel 5 such that it is not involved in the transfer etch for forming the channel 5. Again, this may lead to improved results due to a more uniform edge at the cost of a larger divergence at the location of the dielectric mirror 7.

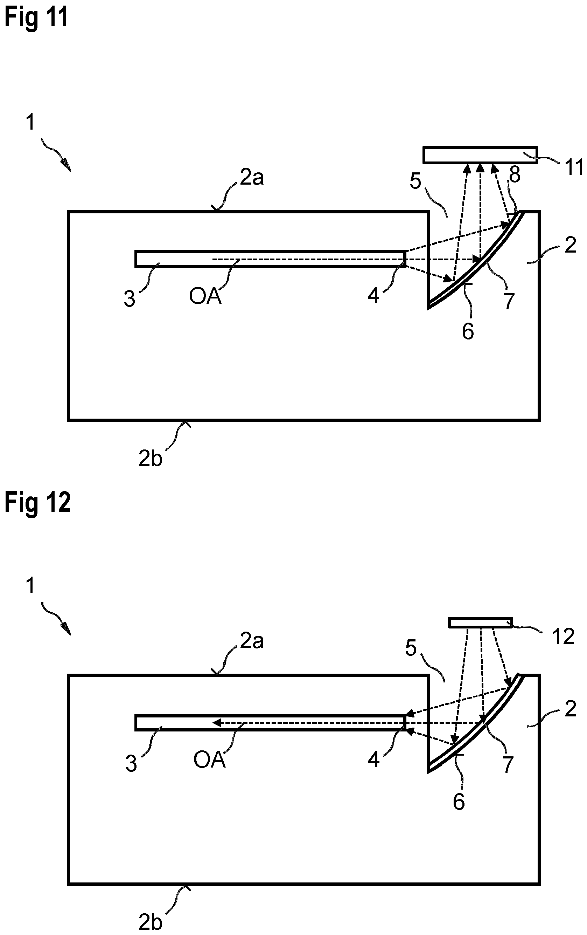

If the divergence becomes too significant, also in this embodiment the angled sidewall surface 6 can be realized as a curved surface leading to a concavely shaped dielectric mirror 7. This is illustrated in Figure 11. Similar to the embodiment of Figure 6, this also leads to a compensation for the divergence, i.e. to a focusing or collimation of the optical signals being deflected onto the deflection path towards the upper surface 2a.

Figure 12 illustrates that the improved concept is also applicable to applications in which the direction of light propagation is inverted. For example, a light source 12 emits optical signals that are to be coupled into the waveguide structure 3. The concave shape of the dielectric mirror 7 also here compensates for a divergence and both deflects and focusses the optical signals onto the end facet 4 of the waveguide structure for efficient coupling. This concept can be applied analogously to other embodiments of the semiconductor optical waveguide device according to the improved concept, for example the embodiments illustrated in the previous figures.

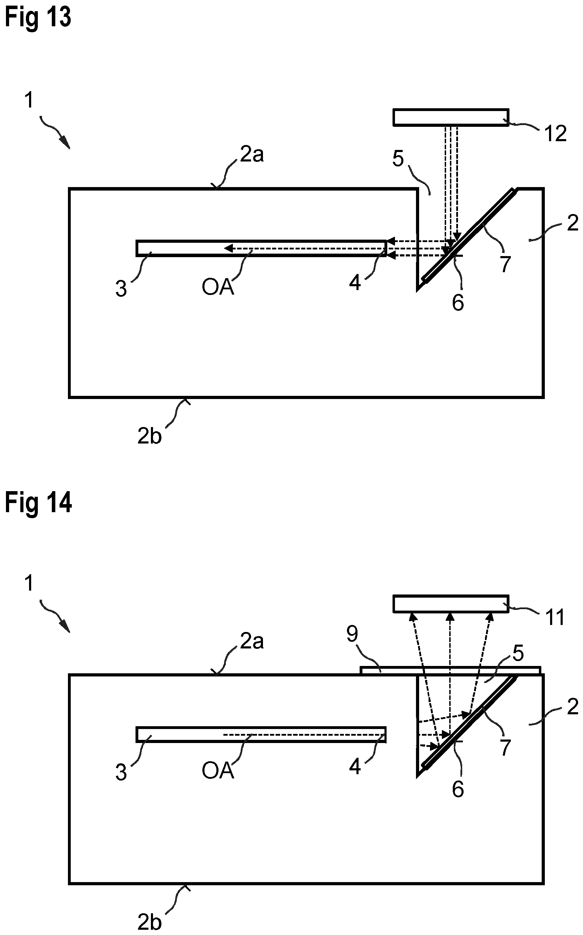

Figure 13 shows an embodiment similar to that of Figure 12. In this embodiment, the light source 12 is a collimated light source, such as a laser light source, therefore not requiring a curved shape of the dielectric mirror 7 as no divergence is to be compensated for.

Figure 14 shows an alternative embodiment of a semiconductor optical waveguide device 1. In this embodiment, the channel 5 is filled with an oxide material, in particular with an oxide material corresponding to that of the cladding layer 2 or with a material that has a refractive index closer to that of the cladding layer 2 compared to air. Such materials include silicon dioxide, which is basically transparent for optical wavelengths of interest for many applications. Filling the channel 5 can lead to improved optical efficiencies due to avoidance of an oxide to gas interface possibly inducing back reflections.

The embodiment of semiconductor optical waveguide device 1 further comprises an anti-reflective coating 9a. The anti-reflective coating 9a can further enhance optical efficiencies of the device by preventing optical losses caused by back reflections when optical signals impinge on the upper or lower surfaces 2a, 2b.

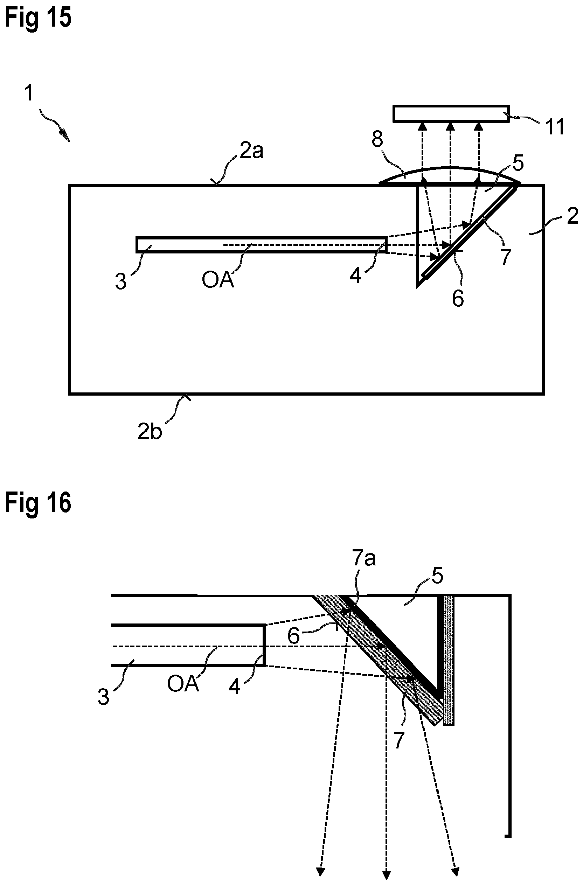

Figure 15 shows a similar embodiment to that in Figure 14 with the difference that the focusing element 8 is realized as a lens element that is arranged on the upper surface 2a. The lens element can have an anti-reflective coating and serves the purpose of focusing and/or collimating optical signals, e.g. for compensating the aforementioned divergence. Likewise, a lens element can be employed in combination with a curved, i.e. concave, dielectric mirror 7 for forming an optical telescope, for instance.

Figure 16 shows a close up cross-sectional view of the channel 5 of an exemplary semiconductor optical waveguide device 1. In this embodiment, after depositing the dielectric mirror 7, a shielding layer 7a is deposited on the dielectric mirror 7. The shielding layer 7a is for example a metallic layer and serves the purpose of further reducing optical losses as well as a protective layer of the dielectric mirror 7.

In embodiments, in which the optical signals are deflected from or towards the upper surface 2a, the shielding layer may be arranged between the dielectric mirror 7 and the angled sidewall surface 6.

The embodiments of the semiconductor optical waveguide device 1 shown in the figures represent exemplary embodiments, therefore they do not constitute a complete list of all embodiments according to the improved concept. Actual semiconductor optical waveguide devices may vary from the embodiments shown in terms of additional components and configuration, for instance. In particular, features shown in the various figures may be combined with each other and hence form additional embodiments according to the improved concept.

### Reference symbols

- 1: semiconductor optical waveguide device
- 2: cladding layer
- 2a: upper surface
- 2b: lower surface
- 3: waveguide structure
- 4: end facet
- 5: channel
- 6: angled sidewall surface
- 6a: vertical sidewall surface
- 7: dielectric mirror
- 7a: shielding layer
- 8: focusing element
- 9: anti-reflective coating
- 10: coating
- 11: light-sensitive element
- 12: light source
- OA: optical axis

## Claims

1. A semiconductor optical waveguide device (1) comprising
- a cladding layer (2) of an oxide material, the cladding layer (2) having an upper surface (2a) and a lower surface (2b) ;
- a waveguide structure (3) disposed within the cladding layer (2), the waveguide structure (3) having an end facet (4) and an extension direction of the waveguide structure (3) being oriented along an optical axis (OA);
- a channel (5) extending into the cladding layer (2) from the upper surface (2a) at least to the optical axis (OA), the channel (5) having an angled sidewall surface (6); and
- a dielectric mirror (7) disposed in the channel (5) on the angled sidewall surface (6) for deflecting optical signals onto and/or out of the optical axis (OA).

2. The semiconductor optical waveguide device (1) according to claim 1, further comprising a focusing element (8) for focusing and/or collimating of light that is deflected by the dielectric mirror (7).

3. The semiconductor optical waveguide device (1) according to claim 2, wherein the focusing element (8) is realized by an arched, in particular by a concave, shape of the dielectric mirror (7).

4. The semiconductor optical waveguide device (1) according to claim 2, wherein the focusing element (8) is a lens element arranged on one of: the optical axis (OA), the dielectric mirror (7), the upper surface (2a) and the lower surface (2b).

5. The semiconductor optical waveguide device (1) according to one of claims 1 to 4, wherein a shielding layer (7a) is arranged on a surface of the dielectric mirror (7) facing away from the end facet.

6. The semiconductor optical waveguide device (1) according to one of claims 1 to 5, wherein the dielectric mirror (7) is configured to deflect optical signals onto and/or out of the optical axis (OA) out of and/or onto a deflection axis that is basically perpendicular to a major substrate surface.

7. The semiconductor optical waveguide device (1) according to claim 6, wherein the deflection axis extends from the dielectric mirror (7) towards the upper surface (2a) or towards the lower surface (2b).

8. The semiconductor optical waveguide device (1) according to one of claims 1 to 7, further comprising an anti-reflective coating (9) disposed on the upper surface (2a) or on the lower surface (2b).

9. The semiconductor optical waveguide device (1) according to one of claims 1 to 8, wherein the channel (5) further comprises a vertical sidewall surface (6a) that is basically perpendicular to a major substrate surface.

10. The semiconductor optical waveguide device (1) according to claim 9, wherein the end facet (4) is basically parallel to the vertical sidewall surface (6a).

11. The semiconductor optical waveguide device (1) according to one of claims 1 to 10, wherein the dielectric mirror (7) comprises a plurality of dielectric layers.

12. The semiconductor optical waveguide device (1) according to one of claims 1 to 11, wherein the channel (5) is filled with an oxide material, in particular the oxide material of the cladding layer (2).

13. An integrated optical device comprising a semiconductor optical waveguide device (1) according to one of claims 1 to 12.

14. A method for manufacturing a semiconductor optical waveguide device (1), the method comprising
- providing a cladding layer (2) of an oxide material, the cladding layer (2) comprising
- an upper surface (2a) and a lower surface (2b); and
- a waveguide structure (3) disposed within the cladding layer (2), the waveguide structure (3) having an end facet (4) and an extension direction of the waveguide structure (3) being oriented along an optical axis (OA);
- forming a channel (5) in the cladding layer (2) extending from the upper surface (2a) at least to the optical axis (OA), wherein forming the channel (5) comprises forming an angled sidewall surface (6) of the channel (5); and
- depositing a dielectric mirror (7) onto the angled sidewall surface (6) for deflecting optical signals onto and/or out of the optical axis (OA).

15. The method according to claim 14, wherein forming the angled sidewall surface (6) comprises forming an arched, in particular a concave, angled sidewall surface (6).
